(19) Europäisches Patentamt
European Patent Office
Office européen des brevets

(11) **EP 1 255 362 B1**

(12) **FASCICULE DE BREVET EUROPEEN**

(45) Date de publication et mention
de la délivrance du brevet:
**20.01.2010 Bulletin 2010/03**

(51) Int Cl.:
*H04W 52/22* (2009.01)       *H04L 1/16* (2006.01)
*H04W 52/48* (2009.01)

(21) Numéro de dépôt: **02290942.8**

(22) Date de dépôt: **15.04.2002**

(54) **Méthode et dispositif de réception de signal**

Verfahren und Vorrichtung zum Empfang eines Signals

Method and apparatus for reception of a signal

(84) Etats contractants désignés:
**AT BE CH CY DE DK ES FI FR GB GR IE IT LI LU
MC NL PT SE TR**

(30) Priorité: **03.05.2001 FR 0106150**

(43) Date de publication de la demande:
**06.11.2002 Bulletin 2002/45**

(73) Titulaire: **Mitsubishi Electric R&D Centre Europe
B.V.
1119 NS Schiphol Rijk (NL)**

(72) Inventeur: **Voyer, Nicolas,
c/o Mitsubishi Electricite
35700 Rennes (FR)**

(74) Mandataire: **Maillet, Alain
Cabinet LE GUEN MAILLET
5, place Newquay
BP 70250
35802 Dinard Cedex (FR)**

(56) Documents cités:
**EP-A- 0 872 964    US-A- 6 111 910**

**Description**

La présente invention concerne de manière générale une méthode et un dispositif de réception de signal à l'aide d'un réseau d'antennes. Elle s'applique particulièrement à la réception par une station de base de signaux émis par un ou plusieurs terminaux mobiles.

La formation de faisceau (encore appelée formation de voie) est bien connue dans le domaine du traitement d'antenne en bande étroite. Elle met en oeuvre un réseau d'antennes, généralement linéaire et uniforme (c'est-à-dire de pas constant) et un module de pondération des signaux. Pour former une voie en réception, les signaux reçus par les différentes antennes du réseau sont pondérés par un jeu de coefficients complexes avant d'être sommés.

Si l'on note $x=(x_0,x_1,..,x_{N-1})^T$ le vecteur des signaux reçus par les $N$ antennes du réseau et $w=(w_0,w_1,..,w_{N-1})^T$ le vecteur des coefficients de pondération (que nous appellerons plus simplement vecteur de pondération), le signal de sortie $y$ du formateur de voie s'écrira :

$$y=\mathbf{w}^T\mathbf{x} \qquad\qquad (1)$$

Lorsque l'on souhaite recevoir le signal émis par une source donnée (par exemple un terminal mobile), les coefficients de pondération $w_i$ sont déterminés pour que le faisceau de réception pointe dans la direction de cette source. Dans la plupart des cas, on ne connaît pas la direction d'arrivée du signal (DOA ou Direction Of Arrival) et on a recours à l'une des nombreuses méthodes d'estimation disponibles dans l'état de la technique (par exemple MUSIC, ESPRIT et leurs dérivées).

Si l'on dispose d'une connaissance *a priori* d'un signal de référence émis par la source (ou d'une estimation d'un signal émis), on peut déterminer les coefficients de pondération de manière à minimiser l'erreur quadratique moyenne entre la sortie du formateur de voie et le signal de référence. L'équation (1) représente une opération de filtrage spatial et les coefficients du filtre optimal peuvent alors être obtenus par l'équation de Wiener-Hopf:

$$\mathbf{w}^T=\mathbf{R}_{dx}\mathbf{R}_{xx}^{-1} \qquad\qquad (2)$$

où $\mathbf{R}_{xx}$ est la matrice d'autocorrélation des signaux reçus, soit $\mathbf{R}_{xx}=E(\mathbf{x}\mathbf{x}^H)$ et $\mathbf{R}_{dx}$ est la matrice (en l'occurrence, ici, celle d'une forme linéaire) de corrélation du signal de référence $d$ avec les signaux reçus, soit $\mathbf{R}_{dx}=E(d\mathbf{x}^H)$. Ces matrices doivent être mises à jour lorsque la fonction de transfert spatiale varie.

Si l'on souhaite recevoir les signaux émis par une pluralité de sources $S_0,..S_{M-1}$ au moyen du réseau d'antennes, il suffit de former une pluralité $M$ de faisceaux pointant dans les directions d'arrivée respectives des signaux émis par les différentes sources. Si l'on dispose d'une connaissance *a priori* de signaux de référence $d_0,..,d_{M-1}$ émis par les différentes sources, on peut déterminer les coefficients de pondération de chacun des $M$ formateurs de voies grâce à la matrice:

$$\mathbf{W}^T=\mathbf{R}_{dx}\mathbf{R}_{xx}^{-1} \qquad\qquad (3)$$

où $\mathbf{R}_{xx}$ est la matrice d'autocorrélation des signaux reçus, soit $\mathbf{d}=(d_0,..,d_{M-1})^T$ est le vecteur des signaux de référence et $\mathbf{R}_{dx}$ est la matrice de corrélation entre les signaux de référence et les signaux reçus, soit $\mathbf{R}_{dx}=E(\mathbf{d}\mathbf{x}^H)$. Les vecteurs de pondération respectifs des différents formateurs de voie sont donnés par les colonnes de la matrice $\mathbf{W}$.

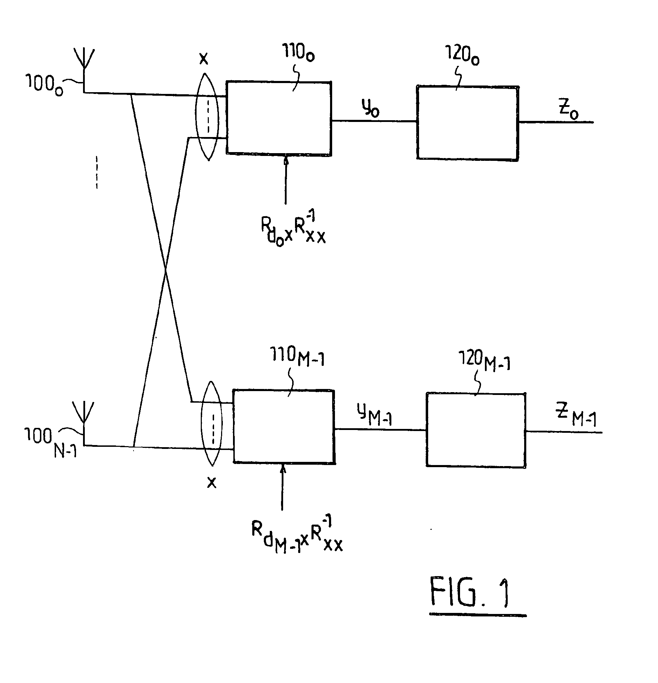

Cette technique a été en particulier appliquée dans le domaine des télécommunications mobiles, notamment aux systèmes CDMA (Code Division Multiple Access) où elle est connue sous l'acronyme CAAAD (Coherent Adaptive Array Diversity). Un récepteur CAAAD est illustré schématiquement en Fig. 1. Il comprend un réseau d'antennes $100_0,..,100_{N-1}$, des formateurs de voie $110_0,..,110_{M-1}$ recevant les $N$ signaux d'antennes et fournissant les signaux de voie $y_0,..,y_{M-1}$ à des récepteurs RAKE $120_0,..,120_{M-1}$. Chacun des $M$ formateurs de voie pointe vers la direction d'arrivée du signal émis par un terminal mobile. En sortie de chaque formateur de voie, un récepteur RAKE effectue une combinaison MRC (Maximum Ratio Combining) des signaux relatifs aux différents trajets de propagation entre le terminal mobile considéré et le réseau d'antennes. On suppose que l'ensemble des trajets de propagation est reçu par le formateur de voie.

La technique de réception CAAAD est optimale selon un critère de minimisation de l'erreur quadratique moyenne (MMSE ou Minimum Mean Square Error) mais elle est difficile à mettre en oeuvre. En effet, elle nécessite autant de formateurs de voie que de terminaux mobiles présents dans la cellule. En outre, l'inversion de la matrice $\mathbf{R}_{xx}$ (ou de

manière équivalente, la résolution d'un système de *N* équations linéaires à *N* inconnues) est une opération complexe qui, en pratique, devra être effectuée par des circuits dédiés. Qui plus est, la formation de voie devant être adaptative pour suivre le mouvement du terminal, cette opération doit être effectuée fréquemment, ce qui grève les ressources calculatoires du récepteur.

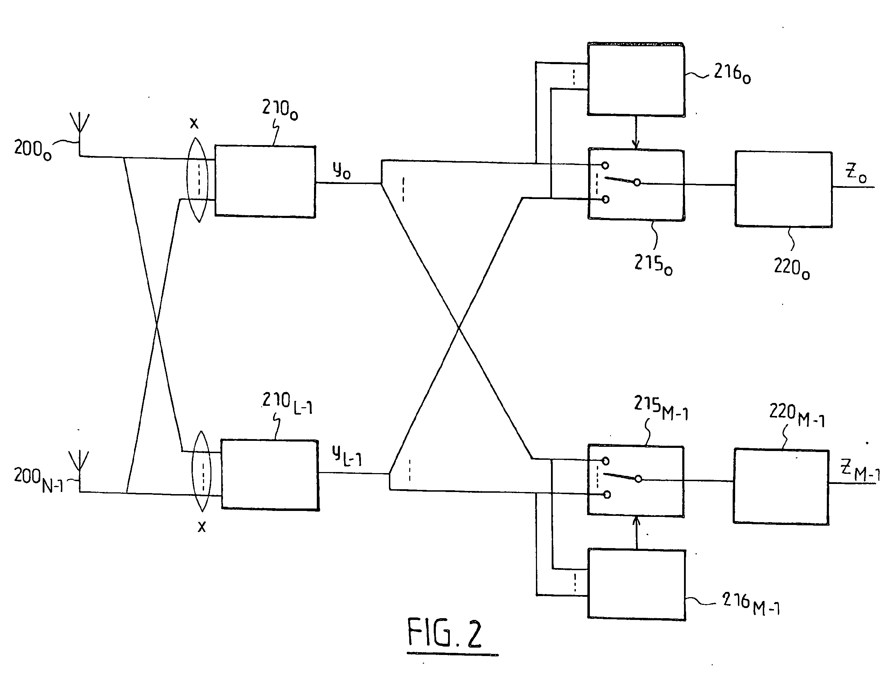

Une technique de réception, plus robuste et moins performante, consiste à former un grand nombre de faisceaux fixes, par exemple des faisceaux angulairement équirépartis et, pour chaque terminal mobile, à sélectionner celui qui fournit le signal de plus forte puissance en provenance dudit terminal. Un récepteur opérant selon ce principe est illustré en Fig. 2. Les formateurs de faisceau $210_0,..,210_{L-1}$ avec *L»N,* où *N* est le nombre de terminaux mobiles, forment *L* faisceaux fixes à partir des signaux reçus par les antennes $200_0,..,200_{N-1}$. Les signaux de voie $y_0,..,y_{L-1}$ en sortie des formateurs de faisceau sont transmis à une pluralité de modules de sélection $215_0,..,215_{M-1}$, chaque module de sélection étant associé à un terminal mobile. Des modules de décision $216_0,..,216_{M-1}$ fournissent à chacun des modules de sélection l'indice de la voie à sélectionner. Un module de décision $216_i$ associé à un terminal $i \in \{0,..,N-1\}$ effectue une corrélation entre les signaux de voie $y_0,..,y_{L-1}$ et un signal de référence émis par ce terminal, choisit l'indice de voie fournissant l'énergie la plus élevée et le transmet au module de sélection $215_i$. Les signaux de référence des différents terminaux doivent être choisis orthogonaux : pour un système CDMA, on utilisera les symboles pilotes transmis sur le canal montant DPCCH (Dedicated Physical Control CHannel). Les signaux de voie sélectionnés par les modules de sélection $215_0,..,215_{M-1}$ sont ensuite fournis à des récepteurs RAKE $222_0,..,220_{M-1}$ exploitant la diversité de réception au sein du faisceau fixe sélectionné.

Cette technique de réception présente cependant de nombreux inconvénients. Elle nécessite, d'une part, la formation d'un très grand nombre de faisceaux pour obtenir une bonne résolution de pointage angulaire. D'autre part, elle fonctionne mal dans un environnement micro ou pico-cellulaire dans lequel la propagation s'effectue selon des trajets présentant une large dispersion angulaire du fait des réflexions multiples. Dans ce cas, le faisceau fixe sélectionné pour un terminal ne contiendra bien souvent que le trajet de propagation de plus forte puissance et les autres trajets ne seront pas exploités par le récepteur RAKE en aval.

Le but de l'invention est de proposer une méthode de réception au moyen d'un réseau d'antennes qui ne présente pas les inconvénients précités, en particulier qui permette une réception optimale de signaux émis par une pluralité de sources sans nécessiter d'importantes ressources calculatoires.

A cette fin, l'invention est définie par une méthode de réception d'un signal émis par une source au moyen d'un réseau d'antennes, dans laquelle on forme une pluralité de signaux de voie par pondération des signaux reçus par les différentes antennes. Selon cette méthode chacun desdits signaux de voie est corrélé avec la réplique d'un signal de référence émis par ladite source et lesdits signaux de voie sont combinés au moyen de coefficients obtenus à partir des résultats de corrélation.

Les coefficients peuvent être obtenus par conjugaison complexe desdits résultats de corrélation et les signaux de voie peuvent être normalisés préalablement à leur combinaison.

Typiquement, les coefficients sont obtenus à partir d'une fonction linéaire des résultats de corrélation préalablement conjugués. Avantageusement, les coefficients sont obtenus par l'opération matricielle $\gamma=\Omega^{-1}\alpha^{\star}$ où $\gamma=(\gamma_0,..,\gamma_{L-1})^T$ est le vecteur desdits coefficients, $\alpha=(\alpha_0,..,\alpha_{L-1})^T$ est le vecteur desdits résultats de corrélation, *L* est le nombre de signaux de voie et $\Omega$ est une matrice de taille *LxL* dont les coefficients sont fonction de la corrélation des fonctions de gain relatives aux différentes voies.

Selon une première variante, les coefficients $\Omega_{\ell'\ell}$ sont obtenus par $\Omega_{\ell'\ell}=\mathbf{g}^H_{\ell'}\mathbf{g}_\ell$ où $\mathbf{g}_\ell$ et $\mathbf{g}_{\ell'}$ sont des vecteurs formés par échantillonnage angulaire des fonctions de gain relatives aux voies d'indices $\ell$ et $\ell'$.

Selon une seconde variante, les coefficients $\Omega_{\ell'\ell}$ sont obtenus par $\Omega_{\ell'\ell}=\int G_{\ell'}(\theta)^{\star} G_\ell(\theta)d\theta$ où $G_\ell(\theta)$ et $G_{\ell'}(\theta)$ sont les fonction de gain relatives aux voies d'indices $\ell$ et $\ell'$ respectivement et où la sommation est effectuée sur la plage angulaire de balayage définie par le réseau.

Avantageusement, le signal résultant de la combinaison desdits signaux de voie est soumis à une remise en phase des composantes relatives aux différents trajets de propagation entre ladite source et ledit réseau.

L'invention est également définie par une méthode de réception au moyen d'un réseau d'antennes de signaux émis par une pluralité de sources, dans laquelle on forme une pluralité de signaux de voie par pondération des signaux reçus par les différentes antennes et dans laquelle, pour chaque source, on corrèle lesdits signaux de voie avec une réplique du signal de référence émis par ladite source et l'on combine lesdits signaux de voie au moyen de coefficients obtenus à partir des résultats de corrélation.

Avantageusement, on procède préalablement à l'étape de combinaison et pour chaque signal de voie, à une remise en phase des composantes relatives aux différents trajets de propagation entre ladite source et ledit réseau.

Typiquement, pour chaque source $S_m$ les coefficients sont obtenus par l'opération matricielle $\gamma^{\mathbf{m}}=\Omega^{-1}(\alpha^{\mathbf{m}})^{\star}$ où $\gamma_{\mathbf{m}}=(\gamma^m_0,...,\gamma^m_{L-1})^T$ est le vecteur des coefficients pour la source $S_m$, $\alpha_{\mathbf{m}}=(\alpha^m_0,...,\alpha^m_{L-1})^T$ est le vecteur desdits résultats de corrélation, *L* est le nombre de signaux de voie et $\Omega$ est une matrice de taille *LxL* dont les coefficients sont fonction de la corrélation des fonctions de gain relatives aux différentes voies.

Selon une première variante, les coefficients $\Omega_{\ell'\ell}$ sont obtenus par $\Omega_{\ell'\ell}=\mathbf{g}^H_{\ell'}\mathbf{g}_\ell$ où $\mathbf{g}_\ell$ et $\mathbf{g}_{\ell'}$ sont des vecteurs

formés par échantillonnage angulaire des fonctions de gain relatives aux voies d'indices $\ell$ et $\ell'$.

Selon une seconde variante, les coefficients $\Omega_{\ell'\ell}$ sont obtenus par $\Omega_{\ell'\ell}=\int G_{\ell'}(\theta)^{\star} G_{\ell}(\theta)d\theta$ où $G_{\ell}(\theta)$ et $G_{\ell'}(\theta)$ sont les fonction de gain relatives aux voies d'indices $\ell$ et $\ell'$ respectivement et où la sommation est effectuée sur la plage angulaire de balayage définie par le réseau.

L'invention est encore définie par un dispositif de réception d'un signal émis par une source ou une pluralité de sources comprenant des moyens pour mettre en oeuvre la méthode exposée ci-dessus.

Les caractéristiques de l'invention mentionnées ci-dessus, ainsi que d'autres, apparaîtront plus clairement à la lecture de la description suivante faite en relation avec les figures jointes, parmi lesquelles :

La Fig. 1 représente de manière schématique un premier type de dispositif de réception connu ;
La Fig. 2 représente de manière schématique un second type de dispositif de réception connu ;
La Fig. 3 représente de manière schématique un dispositif de réception selon l'invention ;
la Fig. 4 représente de manière schématique un module de l'invention, selon une première variante de réalisation;
la Fig. 5 représente de manière schématique un module de l'invention, selon une seconde variante de réalisation ;
la Fig. 6 représente un exemple d'application de l'invention à un système DS-CDMA;
la Fig. 7 représente un module du système de la Fig. 6 selon un premier exemple de réalisation ;
la Fig. 8 représente un sous-module du module de la Fig. 7 ;
la Fig. 9 représente un module du système de la Fig. 6 selon un second exemple de réalisation ;
la Fig. 10 représente un sous-module du module de la Fig. 9.

Un première idée à la base de l'invention repose sur la possibilité de décomposer une fonction de gain de réception sur un ensemble de faisceaux élémentaires.

Un seconde idée à la base de l'invention est d'utiliser cette décomposition pour s'affranchir de l'inversion matricielle dans l'équation (2) ou (3).

La demande de brevet français déposée le 31.10.2000 au nom de la demanderesse sous le numéro FR2816161 montre que l'on peut décomposer toute fonction de gain obtenue par formation de voie (à l'émission comme à la réception) sur un ensemble de fonctions élémentaires. Nous rappellerons brièvement ci-après les principaux résultats qui y sont exposés.

Soit $h$ l'application linéaire de $\mathbf{C}^N$ dans l'espace vectoriel $\mathbf{F}$ des fonctions complexes définies sur la plage angulaire dans laquelle opère le réseau (par exemple $[-\pi/2, \pi/2]$ pour un réseau linéaire) qui associe à tout vecteur $\mathbf{v}$ de $\mathbf{C}^N$ la fonction de gain complexe en réception $G=h(\mathbf{v})$ obtenue par pondération des signaux d'antennes par les coefficients $v_i$, $i=0,...,N\text{-}1$, soit, par exemple, pour un réseau linéaire :

$$G(\theta)=\sum_{i=0}^{N-1} v_i \exp(-j\varphi_i(\theta)) \tag{4}$$

où $\varphi_i(\theta)=(2\pi d/\lambda)i.\sin\theta$ est la différence de marche entre deux antennes consécutives, $d$ et $\lambda$ sont respectivement le pas du réseau et la longueur d'onde considérée. L'image de $\mathbf{C}^N$ par $h$ noté $\text{Im}(h)$ est un sous-espace vectoriel de $\mathbf{F}$ de dimension au plus égal à N. Soit maintenant une fonction de gain $G'(\theta)$ que l'on souhaite générer au moyen du réseau d'antennes. La fonction $G'(\theta)$ peut être projetée sur $\text{Im}(h)$ : soit $G'_P(\theta)$ cette projection. Il existe un vecteur $\mathbf{v}$ tel que $h(\mathbf{v})= G'_P$ et l'on peut montrer que ce vecteur permet d'approcher au mieux la fonction de gain $G'(\theta)$.

Par ailleurs, la fonction de gain complexe obtenue $G(\theta)$ (dont le module donne le diagramme de l'antenne équivalente au réseau) est à bande limitée. On peut donc l'échantillonner angulairement à une fréquence supérieure à la fréquence de Nyquist sans perte d'information. On peut montrer par exemple que la fréquence de Nyquist est de $N$ rad$^{-1}$ pour un réseau linéaire et de $2N$ rad$^{-1}$ pour un réseau circulaire, ce qui conduit à prendre $K>\pi N$ (en pratique $K=4N$) échantillons sur la plage angulaire $[-\pi/2,\pi/2]$ dans le premier cas et le même nombre d'échantillons sur la plage angulaire $[-\pi,\pi]$ dans le second cas.

Si l'on note $(g_k)$, $k=0,..,K\text{-}1$ les échantillons du diagramme complexe, c'est-à-dire $g_k=G(\theta_k)$ où les $\theta_k$ sont $M$ angles équirépartis sur $[-\pi/2,\pi/2]$ (réseau linéaire) ou $[-\pi,\pi]$(réseau circulaire) définissant les directions d'échantillonnage, on peut définir une application linéaire, $h_s$ de $\mathbf{C}^N$ dans $\mathbf{C}^K$ qui fait correspondre à tout vecteur de pondération $\mathbf{v}$ le vecteur de gain $h(\mathbf{v})=\mathbf{g}=(g_0,g_1,..,g_{K-1})$. L'image de $\mathbf{C}^N$ par $h_s$ est un sous-espace vectoriel de $\mathbf{C}^K$ de dimension au plus égal à $N$ que nous noterons $\text{Im}(h_s)$. Si l'on choisit une base de $\mathbf{C}^N$, par exemple la base canonique et une base de $\mathbf{C}^K$ on peut exprimer l'application linéaire $h$ par une matrice $\mathbf{H}$ de taille $KxN$ qui est au plus de rang $N$.

Soit maintenant $\mathbf{g}'$ un vecteur de gain correspondant à une fonction $G'(\theta)$ de gain complexe échantillonnée quelconque que l'on désire obtenir. On peut trouver un vecteur $\mathbf{v}$ tel que $h_s(v)$ soit le proche possible de $\mathbf{g}'$ au sens de la métrique euclidienne sur $\mathbf{C}^K$, c'est-à-dire tel que $h_s(v)= \mathbf{g'}_p$ où $\mathbf{g'}_p$ est la projection orthogonale du vecteur $\mathbf{g}'$ sur $\text{Im}(h_s)$. Si la matrice $\mathbf{H}$ est de rang $N$, le vecteur $\mathbf{v}$ cherché s'écrit :

$$v = H^+ g' \tag{5}$$

où $H^+$ est la matrice pseudo-inverse de $H$ définie par $H^+ = (H^H H)^{-1} H^H$ où $H^H$ transposée conjuguée de la matrice $H$. Le vecteur de pondération $v$ permettra d'obtenir grâce à la formation de voie une fonction de gain $G(\theta)$ approchant au mieux la fonction de gain désirée $G'(\theta)$.

En théorie, $N$ vecteurs indépendants de l'espace $\text{Im}(h_s)$ permettent de le générer. On pourra cependant se contenter pour des raisons que nous verrons par la suite, de générer un sous espace $F_L$ de $\text{Im}(h_s)$ au moyen d'un ensemble de vecteurs indépendants de cardinal $L \leq N$. On notera que $F_N = \text{Im}(h_s)$. Les vecteurs générateurs de $F_L$ seront notés $g_0,..,g_{L-1}$. En pratique, on pourra choisir $L=N$ vecteurs correspondant à des faisceaux pointant dans les directions d'échantillonnage $\theta_k$. Nous noterons $B_0, B_1,.. B_{L-1}$ les faisceaux correspondant aux vecteurs générateurs de $F_L$ et nous les appellerons simplement « faisceaux générateurs ». Les vecteurs de pondération permettant de former les faisceaux générateurs seront notés $v_0,..,v_{L-1}$, autrement dit $h(v_\ell) = g_\ell$.

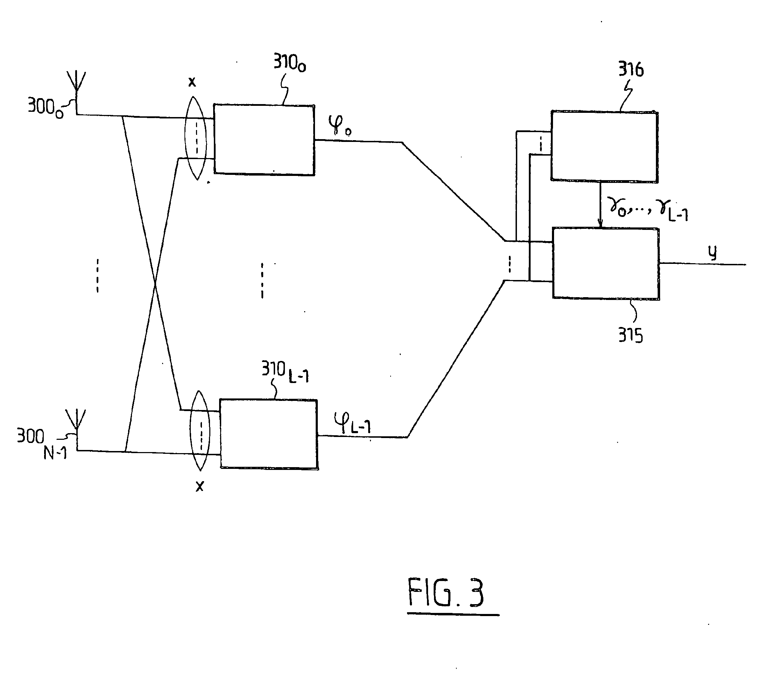

La Fig. 3 illustre un dispositif de réception selon l'invention. On y distingue des formateurs de voie $310_0$,.., $310_{L-1}$ chargés de former les $L$ faisceaux générateurs précités. Si la plage angulaire présente une zone aveugle dans laquelle aucune source de signal n'est susceptible de se trouver, aucun faisceau générateur ne sera choisi dans cette zone. Les signaux de voie $\varphi_0,.., \varphi_{L-1}$ sont dirigés vers un module de combinaison 315 qui calcule le signal de sortie $y$ par :

$$y = \sum_{\ell=0}^{L-1} \gamma_\ell \varphi_\ell \tag{6}$$

où les coefficients $\gamma_\ell$, $\ell=1,..,L$ sont fournis par le module d'optimisation 316.

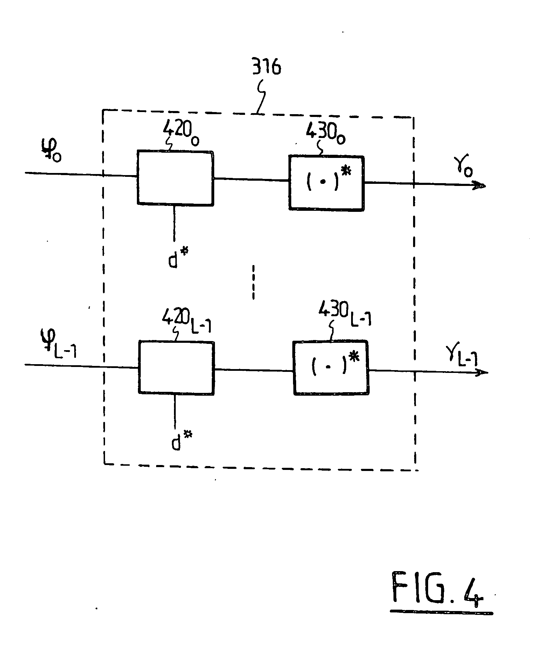

La Fig. 4 illustre le module d'optimisation 316 selon une première variante de réalisation. Ce dernier effectue la corrélation entre les signaux de voie $\varphi_0,.., \varphi_{L-1}$ et une réplique d'un signal de référence émis $d$ par la source S, soit :

$$\alpha_\ell = E\left(\varphi_\ell d^*\right) \tag{7}$$

Les coefficients $\alpha_\ell$ sont conjugués en $430_0,..,430_{L-1}$ pour fournir les coefficients de combinaison $\gamma_\ell$. Ces derniers sont utilisés par le module de combinaison 315 pour réaliser une combinaison cohérente des signaux de voie $\varphi_0,.., \varphi_{L-1}$ de type MRC. Si les L faisceaux générateurs sont séparés (autrement dit, si les L vecteurs de gain associés à ces faisceaux sont choisis orthogonaux), la méthode de réception fournissant $y$ est optimale. En revanche, si les L faisceaux générateurs sont imparfaitement séparés, les signaux des différentes voies sont corrélés et la combinaison MRC n'est plus optimale. En effet, les signaux interférents reçus par les faisceaux imparfaitement séparés sont également combinés de manière cohérente.

Si le niveau d'interférence n'est pas le même pour chacun des faisceaux, les signaux de voie sont normalisés préalablement à leur combinaison. Le signal de sortie s'obtient alors par :

$$y = \sum_{\ell=0}^{L-1} \gamma_\ell \frac{\varphi_\ell}{|\varphi_\ell|} \tag{8}$$

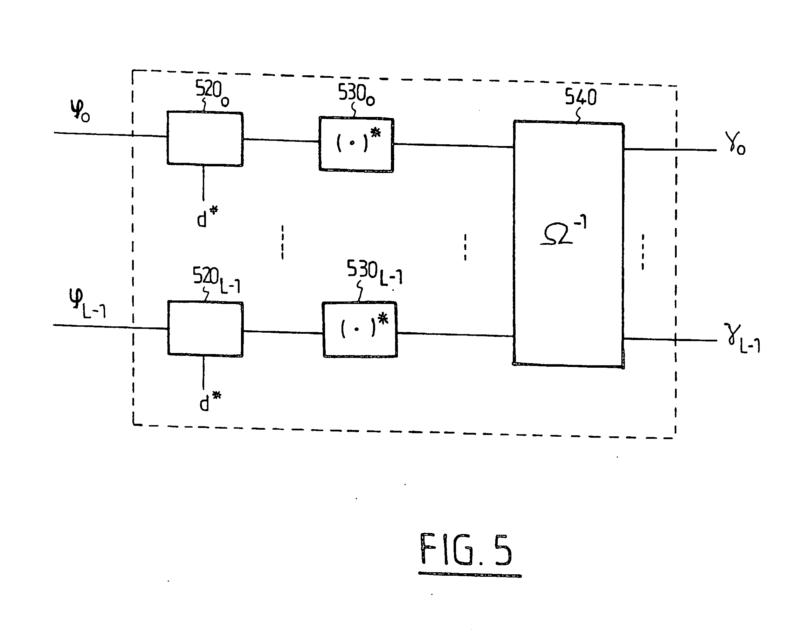

La Fig. 5 illustre le module d'optimisation 316 selon une seconde variante de réalisation. Selon cette variante, l'on cherche à approcher au mieux une formation de voie optimale par une combinaison de faisceaux générateurs.

On peut exprimer le vecteur $x$ en fonction du signal de la source et d'une fonction de transfert spatiale:

$$x = as + b \tag{9}$$

où $a$ est un vecteur de dimension $N$ exprimant la fonction de transfert spatiale entre la source et le réseau d'antennes et **b** est le vecteur de bruit dont les composantes sont supposées gaussiennes.

Le signal *s* émis par la source S arrive sur le réseau avec une distribution angulaire $F(\theta)$. Nous appellerons **f** le vecteur de dimension $K$ dont les composantes sont $F(\theta_k)$ où les angles $\theta_k$ définissent les directions d'échantillonnage. On a donc, par linéarité de la fonction $h$ :

$$f=h(\mathbf{a}s+\mathbf{b})=s.h(\mathbf{a})+\mathbf{n} \qquad (10)$$

où $\mathbf{n}=h(\mathbf{b})$. Le signal de voie $\varphi$ correspondant à une fonction de gain complexe $G(\theta)$ et à un vecteur de gain associé **g** peut s'écrire:

$$\varphi=\mathbf{g}^\mathbf{T}\mathbf{f} \qquad (11)$$

Le vecteur optimal $\mathbf{g}_{opt}$ vérifie par conséquent :

$$\mathbf{g}_{opt}=(h(\mathbf{a}))^* \qquad (12)$$

d'où

$$s^*\mathbf{g}_{opt}+\mathbf{n}^*=\mathbf{f}^* \qquad (13)$$

Nous supposerons dans un premier temps que $L=N$. Nous disposons d'un ensemble de vecteurs générateurs de $\mathrm{Im}(h)$, soit $\mathbf{g_0},..,\mathbf{g_{N-1}}$, sur lesquels nous pouvons décomposer le vecteur $\mathbf{g}_{opt}$:

$$\mathbf{g}_{opt}=\sum_{\ell=0}^{N-1}\gamma_\ell\mathbf{g}_\ell \qquad (14)$$

D'autre part, le résultat de la corrélation du signal de voie $\varphi_{\ell'}$ avec le signal émis peut s'écrire:

$$\alpha_\ell=E(\varphi_{\ell'}s^*)=E(\mathbf{f}^\mathbf{T}\mathbf{g}_{\ell'}s^*) \qquad (15)$$

d'où, en tenant compte de (13) et (14) :

$$\alpha_\ell=E(\sum_{\ell=0}^{N-1}\gamma_\ell^*\mathbf{g}_\ell^\mathbf{H}\mathbf{g}_{\ell'}ss^*)+E(\mathbf{n}^\mathbf{T}\mathbf{g}_{\ell'}s)=E(ss^*).\sum_{\ell=0}^{N-1}\gamma_\ell^*\mathbf{g}_\ell^\mathbf{H}\mathbf{g}_{\ell'}=P_s\sum_{\ell=0}^{N-1}\gamma_\ell^*\mathbf{g}_\ell^\mathbf{H}\mathbf{g}_{\ell'} \qquad (16)$$

Si l'on utilise un signal de référence de puissance normalisée, on peut exprimer (16) de manière vectorielle :

$$\gamma=\Omega^{-1}\alpha^* \qquad (17)$$

avec $\gamma=(\gamma_0,..,\gamma_{N-1})^\mathbf{T}$, $\alpha=(\alpha_0,...,\alpha_{N-1})^\mathbf{T}$ et

$$\Omega_{\ell\ell}=\mathbf{g}_{\ell}^{H}\mathbf{g}_{\ell} \tag{18}$$

On rappelle que les vecteurs $\mathbf{g}_{\ell}$ sont les vecteurs constitués par les échantillons des fonctions de gain $G_{\ell}(\theta)$. La formule (18) traduit la corrélation entre les fonctions de gain des faisceaux de base. Si l'on dispose des fonctions $G_{\ell}(\theta)$, cette dernière peut encore s'écrire :

$$\Omega_{\ell\ell}=\int G_{\ell}(\theta)^{\bullet}G_{\ell}(\theta)d\theta \tag{19}$$

où la sommation est effectuée sur la plage angulaire du réseau.

Notons enfin que si les faisceaux sont décorrélés la matrice $\Omega$ est multiple de la matrice identité et l'on retrouve le premier mode de réalisation.

Si l'on suppose $L<N$, on ne peut dans le cas général trouver une décomposition telle que (14) le vecteur $\mathbf{g}_{opt}$ est alors préalablement projeté sur l'espace $\mathbf{F}_{L}$ généré par les vecteurs $\mathbf{g}_{\ell}$. Les relations (17) à (19) restent valables, la matrice $\Omega$ étant alors de dimension $LxL$ et de rang $L$.

Selon la seconde variante de réalisation du module 316 illustrée en Fig. 5, les signaux de voie $\varphi_{0},..,\varphi_{L-1}$ sont corrélés dans les modules $520_{0},..,520_{L-1}$ avec le signal de référence $d$. Les résultats de corrélation $\alpha_{0},..,\alpha_{L-1}$ sont ensuite conjugués par les modules de conjugaison $530_{0},..,530_{L-1}$ avant d'être fournis au module de calcul matriciel 540 calculant $\gamma_{0},..,\gamma_{L-1}$ selon (17).

On notera que la matrice de décorrélation des faisceaux $\Omega^{-1}$ (à l'inverse de la matrice de décorrélation des signaux d'antennes $\mathbf{R^{-1}_{xx}}$) ne dépend que des faisceaux générateurs et donc peut être calculée une fois pour toutes. En particulier, elle ne dépend pas du déplacement de la source S.

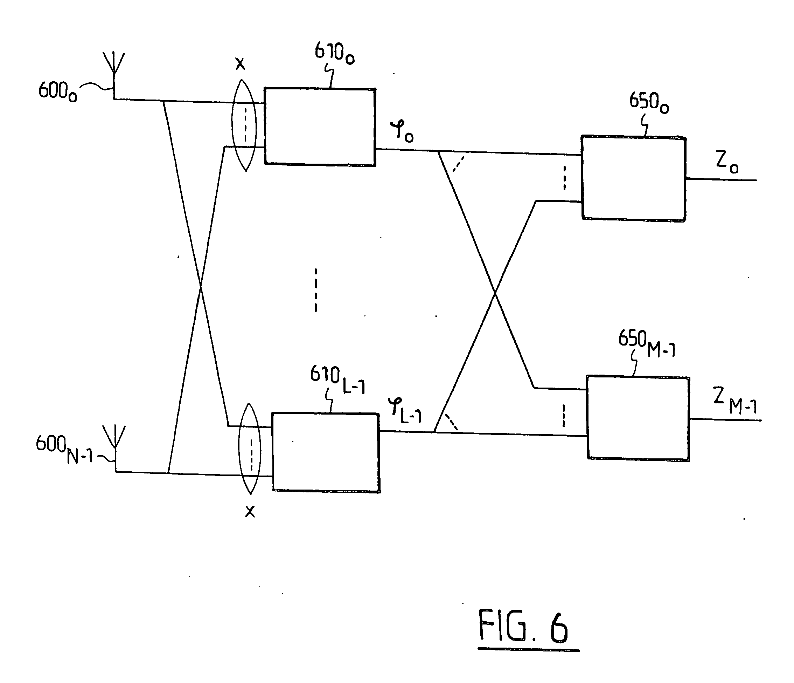

La Fig. 6 illustre un premier exemple d'application de l'invention à un système de réception DS-CDMA. Ce système est, par exemple, situé au niveau d'une station de base pour recevoir les signaux émis par une pluralité $M$ de terminaux mobiles, chaque signal ayant été étalé par un code utilisateur $C_{m}$. Le système comprend un réseau d'antennes $600_{0},..,600_{N-1}$. Les formateurs de voie $610_{0},..,610_{L-1}$ forment les $L$ faisceaux générateurs et produisent les $L$ signaux de voie correspondants $\varphi_{0},..,\varphi_{L-1}$. Ces signaux sont fournis à $M$ modules de combinaison $650_{0},..,650_{M-1}$ qui donnent les signaux reçus $z_{0},..,z_{M-1}$ en provenance des $M$ terminaux.

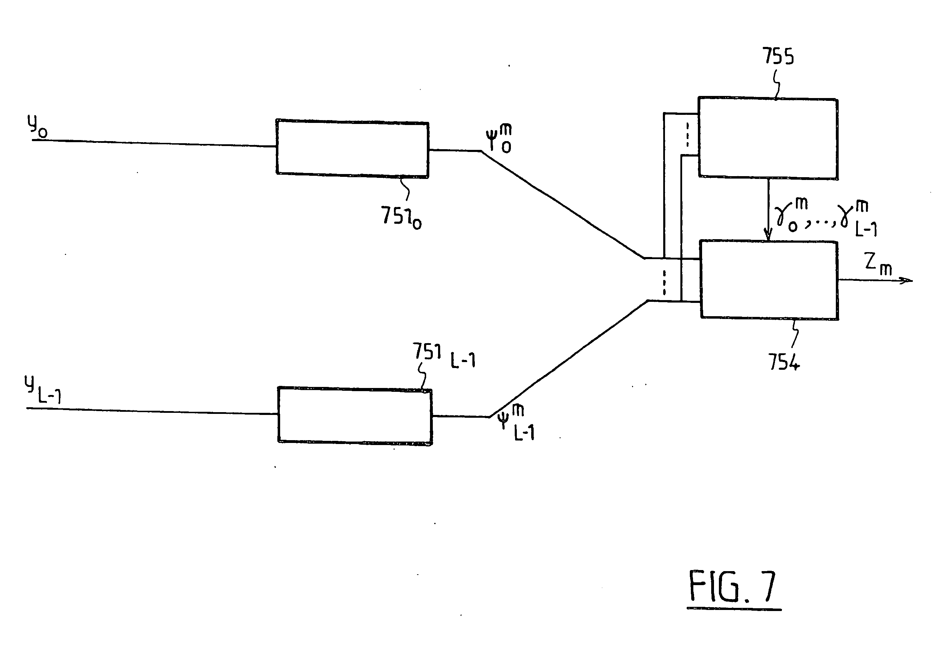

La Fig. 7 illustre la structure d'un module de combinaison $650_{m}$ selon un premier exemple de réalisation. Dans la désignation des différents modules, l'indice $m$ a été omis pour ne pas surcharger les notations. Les différents signaux de voie $\varphi_{0},..,\varphi_{L-1}$ sont transmis à $L$ récepteurs RAKE $751_{0},...,751_{L-1}$ qui corrèlent les signaux de voie avec le code utilisateur $C_{m}$ affecté des retards des différents trajets et effectue la combinaison cohérente des signaux issus des différents trajets. Les signaux $\psi^{m}_{0},...,\psi^{m}_{L-1}$ représentent les combinaisons de trajets au sein des différents faisceaux générateurs. Le module 754 assure la combinaison des différents faisceaux, plus précisément des signaux $\psi^{m}_{0},...,\psi^{m}_{L-1}$ au moyen des coefficients complexes $\gamma^{m}_{\ell}$ donnés par le module d'optimisation 755. Le signal $z_{m}$ en sortie du module 755 fournit une estimation optimale du symbole transmis par le terminal mobile $S_{m}$.

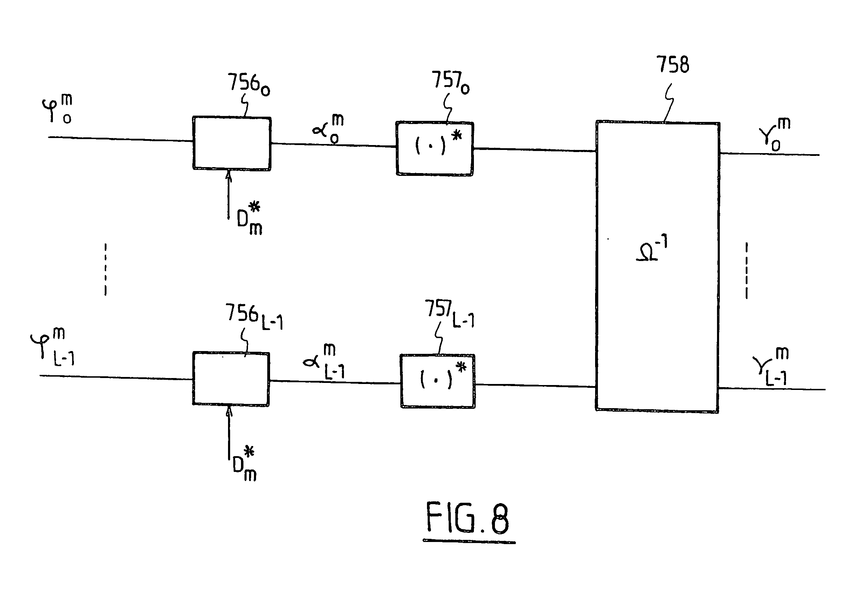

La Fig. 8 illustre la structure du module d'optimisation 755. Les signaux $\psi^{m}_{0},...,\psi^{m}_{L-1}$ sont d'abord corrélés avec le signal pilote désétalé $D_{m}$ et les résultats de corrélation sont ensuite conjugués dans les modules de conjugaison $757_{0},...,757_{L-1}$. Les valeurs conjuguées ainsi obtenues sont transmises à un module de calcul matriciel effectuant le calcul :

$$\gamma^{m}=\Omega^{-1}(\alpha^{m})^{\bullet} \tag{20}$$

où $\gamma_{\mathbf{m}}=(\gamma^{m}_{0},...,\gamma^{m}_{L-1})^{T}$, $\alpha_{\mathbf{m}}=(\alpha^{m}_{0},...,\alpha^{m}_{L-1})^{T}$ et où les coefficients $\Omega_{\ell'\ell}$ sont donnés par (18) ou (19).

Le dispositif de réception illustré par les Figs. 6 à 8 permet d'approcher au mieux une réception optimale grâce à un ensemble de faisceaux générateurs. Chaque faisceau peut recouvrir un ou plusieurs trajets de propagation issus d'un terminal mobile.

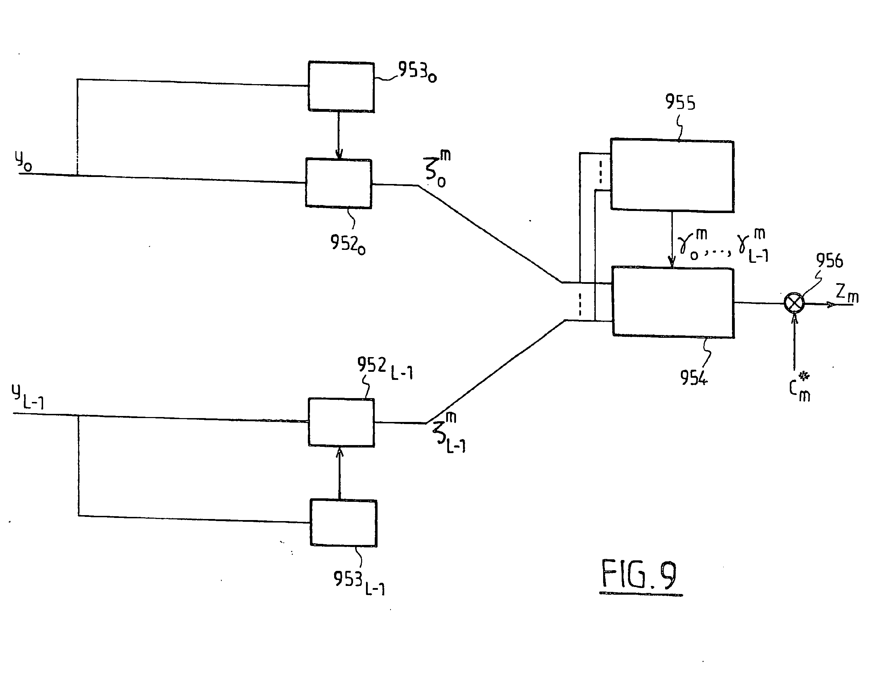

La Fig. 9 illustre la structure d'un module de combinaison $650_{m}$ selon un second exemple de réalisation. Là aussi, dans la désignation des différents modules, l'indice $m$ a été omis pour ne pas surcharger les notations. Les différents signaux de voie $\varphi_{0},..,\varphi_{L-1}$ sont analysés par les analyseurs de retards $953_{0},..,953_{L-1}$ au moyen d'une corrélation avec le code utilisateur $C_{m}$. Chaque signal de voie $\varphi_{\ell}$ est retardé en $952_{\ell}$ par les retards fournis par l'analyseur $953_{\ell}$ et les signaux retardés sont sommés pour fournir un signal $\zeta_{\ell}$. On notera que les signaux $\zeta_{\ell}$ sont alignés temporellement

pour les différents trajets de l'utilisateur *m* mais ne sont pas désétalés. Les signaux $\zeta_\ell$, $\ell=0,..,L$-1 sont ensuite combinés en 954 au moyen des coefficients complexes $\gamma^m_\ell$ donnés par le module d'optimisation 955. Le signal de sortie du module 955 et désétalé en 956 grâce au code utilisateur $C_m$ pour fournir une estimation optimale $z_m$ du symbole transmis par le terminal mobile $S_m$.

On notera que si les trajets d'un utilisateur ne sont pas trop dispersés temporellement au sein d'un faisceau, une version plus robuste sans alignement temporel c'est-à-dire sans les modules $952_\ell$ et $953_\ell$ pourra être envisagée.

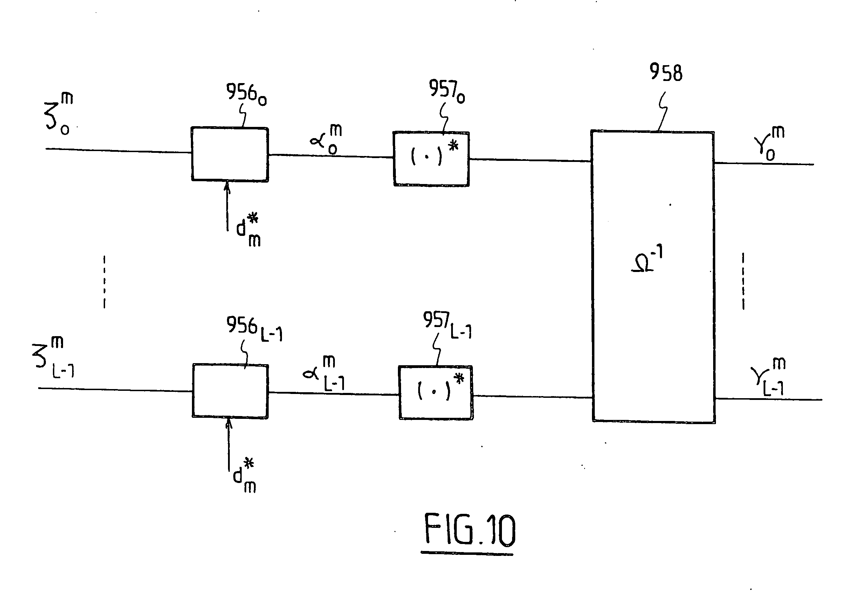

La Fig. 10 illustre la structure du module d'optimisation 955. A la différence du module 755, le module 955 opère avant désétalement spectral. Les signaux $\zeta_\ell$, $\ell=0,..,L$-1 sont corrélés en $956_0,..,956_{L-1}$ avec le signal pilote $d_m$ et les résultats de corrélation sont ensuite conjugués dans les modules de conjugaison $957_0,...,957_{L-1}$. Les valeurs conjuguées ainsi obtenues sont transmises à un module de calcul matriciel 958 identique au module 758.

Il est important de noter que l'invention peut s'appliquer à tout type de réseau d'antennes et notamment à un réseau circulaire.

En outre, le dispositif de réception selon l'invention a été décrit à l'aide de modules fonctionnels. Il va de soi cependant que ces modules peuvent être implémentés aussi bien par des circuits dédiés que par un processeur exécutant tout ou partie des différentes fonctions correspondantes.

## Revendications

1. Méthode de réception d'un signal émis par au moins une source au moyen d'un réseau d'antennes (300), dans laquelle on forme une pluralité de signaux de voie par pondération des signaux respectivement reçus par les différentes antennes et sommation des signaux ainsi pondérés, **caractérisée en ce que**, pour ladite ou chaque source, l'on corrèle (420, 520) chacun desdits signaux de voie avec la réplique d'un signal de référence émis par ladite source considérée et que l'on combine (315) lesdits signaux de voie au moyen de coefficients obtenus à partir des résultats de corrélation.

2. Méthode de réception selon la revendication 1, **caractérisée en ce que** lesdits coefficients sont obtenus par conjugaison complexe desdits résultats de corrélation.

3. Méthode de réception selon la revendication 1 ou 2, **caractérisée en ce que** les signaux de voie sont normalisés préalablement à leur combinaison.

4. Méthode de réception selon la revendication 1, **caractérisée en ce que** les coefficients sont obtenus à partir d'une fonction linéaire des résultats de corrélation préalablement conjugués.

5. Méthode de réception selon la revendication 4, **caractérisée en ce que,** pour chaque source $S_m$, les coefficients sont obtenus par l'opération matricielle

$$\gamma^m = \Omega^{-1}(\alpha^m)^*$$

où $\gamma_m = (\gamma^m_0,..,\gamma^m_{L-1})^T$ est le vecteur des coefficients pour la source $S_m$, $\alpha_m = (\alpha^m_0,...,\alpha^m_{L-1})^T$ est le vecteur desdits résultats de corrélation, L est le nombre de signaux de voie et $\Omega$ est une matrice de taille LxL dont les coefficients sont fonction de la corrélation des fonctions de gain relatives aux différentes voies.

6. Méthode de réception selon la revendication 5, **caractérisée en ce que** les coefficients $\Omega_{\ell\ell'}$ sont obtenus par $\Omega_{\ell\ell'} = \mathbf{g}_\ell^H \mathbf{g}_{\ell'}$ où $g_\ell$ et $g_{\ell'}$ sont des vecteurs formés par échantillonnage angulaire des fonctions de gain relatives aux voies d'indices $\ell$ et $\ell'$.

7. Méthode de réception selon la revendication 5, **caractérisée en ce que** les coefficients $\Omega_{\ell'\ell}$ sont obtenus par $\Omega_{\ell'\ell} = \int G_c(\theta)^* G_\ell(\theta) d\theta$ où $G_\ell(\theta)$ et $G_c(\theta)$ sont les fonction de gain relatives aux voies d'indices $\ell$ et $\ell'$ respectivement et où la sommation est effectuée sur la plage angulaire de balayage définie par le réseau.

8. Méthode de réception selon l'une des revendications précédentes, **caractérisée en ce que** préalablement à la combinaison desdits signaux de voie, chaque signal de voie est soumis à une remise en phase des composantes relatives aux différents trajets de propagation entre ladite source et ledit réseau.

9. Méthode de réception selon la revendication 1, **caractérisée en ce que**, pour chaque source, on procède préalablement à l'étape de combinaison et pour chaque signal de voie, à une remise en phase des composantes relatives aux différents trajets de propagation entre ladite source et ledit réseau.

10. Méthode de réception selon la revendication 9, **caractérisée en ce que**, pour chaque source $S_m$ les coefficients sont obtenus par l'opération matricielle

$$\gamma^m = \Omega^{-1}(\alpha^m)^*$$

où $\gamma_m = (\gamma_0^m, ..., \gamma_{L-1}^m)^T$ est le vecteur des coefficients pour la source $S_m$, $\alpha_m = (\alpha_0^m, ..., \alpha_{L-1}^m)^T$ est le vecteur desdits résultats de corrélation, *L* est le nombre de signaux de voie et $\Omega$ est une matrice de taille *LxL* dont les coefficients sont fonction de la corrélation des fonctions de gain relatives aux différentes voies.

11. Méthode de réception selon la revendication 10, **caractérisée en ce que** les coefficients $\Omega\ell\ell$ sont obtenus par $\Omega_{\ell\ell} = \mathbf{g}_\ell^H \mathbf{g}_\ell$ où $g_\ell$ et $g_{\ell'}$ sont des vecteurs formés par échantillonnage angulaire des fonctions de gain relatives aux voies d'indices $\ell$ et $\ell'$.

12. Méthode de réception selon la revendication 10, **caractérisée en ce que** les coefficients $\Omega_{\ell'\ell}$ sont obtenus par $\Omega_{\ell'\ell} = \int G_{\ell'}(\theta)^* G_\ell(\theta) d\theta$ où $G_\ell(\theta)$ et $G_{\ell'}(\theta)$ sont les fonctions de gain relatives aux voies d'indices $\ell$ et $\ell'$ respectivement et où la sommation est effectuée sur la plage angulaire de balayage définie par le réseau.

13. Dispositif de réception d'un signal émis par au moins une source, **caractérisé en ce qu'**il comprend des moyens pour mettre en oeuvre la méthode selon l'une des revendications 1 à 12.

**Claims**

1. Method of receiving a signal transmitted by at least one source by means of an array of antennae (300), in which a plurality of beam signals are formed by weighting the signals received respectively by the different antennae and by summing the signals weighted in this manner, **characterized in that**, for the said or each source, each of the said beam signals is correlated (420, 520) with the replica of a reference signal transmitted by the said source considered and **in that** the said beam signals are combined (315) by means of coefficients obtained by the correlation results.

2. Method of receiving according to Claim 1, **characterized in that** the said coefficients are obtained by complex conjugation of said correlation results.

3. Method of receiving according to Claim 1 or 2, **characterized in that** the beam signals are normalized prior to their combination.

4. Method of receiving according to Claim 1, **characterized in that** the coefficients are obtained from a linear function of the previously conjugated correlation results.

5. Method of receiving according to Claim 4, **characterized in that**, for each source Sm the coefficients are obtained by the matrix operation

$$\gamma^m = \Omega^{-1}\left(\alpha^m\right)^*$$

where $\gamma_m = \left(\gamma_0^m, ..., \gamma_{L-1}^m\right)^T$ is the vector of the coefficients for the source $S_m$, $\alpha_m = \left(\alpha_{0,...,}^m \alpha_{L-1}^m\right)^T$ is the vector of said correlation results, L is the number of beam signals and $\Omega$ is a matrix of size LxL, the coefficients of which a function of the correlation of the gain functions relating to the different beams.

6.  Method of receiving according to Claim 5, **characterized in that** the coefficients $\Omega_{\ell\ell}$ are obtained by $\Omega_{\ell'\ell} = g_{\ell'}^{H} g_{\ell}$, where $g_\ell$ and $g_{\ell'}$ are vectors formed by angular sampling of the gain functions relating to the beams of indices $\ell$ and $\ell'$.

7.  Method of receiving according to Claim 5, **characterized in that** the coefficients $\Omega_{\ell\ell}$ are obtained by $\Omega_{\ell'\ell} = \int G_{\ell'}(\theta) * G_\ell(\theta)d\theta$ where $G_\ell(\theta)$ and $G_{\ell'}(\theta)$ are gain functions relating to the beams of indices $\ell$ and $\ell'$ respectively and where the summing is effected over the angular scanning range defined by the array.

8.  Method of receiving according to one of the preceding Claims, **characterized in that** prior to the combination of the said beam signals, each beam signal is subjected to a putting-back-in-phase of the components relating to the different propagation paths between said source and said array.

9.  Method of receiving according to Claim 1, **characterized in that**, for each source, prior to the combination step, and for each beam signal, the components relating to the different propagation paths between said source and said array are put-back-in-phase.

10. Method of receiving according to Claim 9, **characterized in that**, for each source $S_m$ the coefficients are obtained by the matrix operation

$$\gamma^m = \Omega^{-1}\left(\alpha^m\right)^*$$

where $\gamma_m = \left(\gamma_0^m, ..., \gamma_{L-1}^m\right)^T$ is the vector of the coefficients for the source $S_m$, $\alpha_m = \left(\alpha_0^m, ..., \alpha_{L-1}^m\right)^T$ is the vector of said correlation results, L is the number of beam signals and $\Omega$ is a matrix of size LxL, the coefficients of which are a function of the correlation of the gain functions relating to the different beams.

11. Method of receiving according to Claim 10, **characterized in that** coefficients $\Omega_{\ell'\ell}$ are obtained by $\Omega_{\ell'\ell} = g_{\ell'}^{H} g_{\ell}$, where $g_\ell$ and $g_{\ell'}$ are vectors formed by angular sampling of the gain functions relating to the beams of indices $\ell$ and $\ell'$.

12. Method of receiving according to Claim 10, **characterized in that** the coefficients $\Omega_{\ell'\ell}$ are obtained by $\Omega_{\ell'\ell} = \int G_{\ell'}(\theta) * G_\ell(\theta)d\theta$ where $G_\ell(\theta)$ and $G_{\ell'}(\theta)$ are gain functions relating to the beams of indices $\ell$ and $\ell'$ respectively and where the summing is effected over the angular scanning range defined by the array.

13. Device for receiving a signal transmitted by at least one source, **characterized in that** said device comprises means for implementing the method according to one of Claims 1 to 12.


**Patentansprüche**

1.  Verfahren zum Empfang eines durch mindestens eine Quelle ausgesendeten Signals mittels eines Antennennetzes (300), wobei durch Gewichtung der jeweils durch die verschiedenen Antennen empfangenen Signale und Summierung der so gewichteten Signale mehrere Wegsignale gebildet werden, **dadurch gekennzeichnet, dass** jedes der Wegsignale für die oder jede Quelle mit der Replik eines durch die berücksichtigte Quelle ausgesendeten Referenzsignals korreliert (420, 520) wird und dass die Wegsignale mittels ausgehend von den Korrelationsergebnissen erhaltenen Koeffizienten kombiniert (315) werden.

2.  Empfangsverfahren nach Anspruch 1, **dadurch gekennzeichnet, dass** die Koeffizienten durch komplexe Konjugation der Korrelationsergebnisse erhalten werden.

3.  Empfangsverfahren nach Anspruch 1 oder 2, **dadurch gekennzeichnet, dass** die Wegsignale vor ihrer Kombination normalisiert werden.

4. Empfangsverfahren nach Anspruch 1, **dadurch gekennzeichnet, dass** die Koeffizienten ausgehend von einer linearen Funktion der vorhergehend konjugierten Korrelationsergebnisse erhalten werden.

5. Empfangsverfahren nach Anspruch 4, **dadurch gekennzeichnet, dass** für jede Quelle $S_m$ die Koeffizienten durch die Matrixoperation $\gamma^m = \Omega^{-1}(\alpha^m)^*$ erhalten werden,

   wobei $\gamma_m = (\gamma_0^m, ..., \gamma_{L-1}^m)^T$ der Vektor der Koeffizienten für die Quelle $S_m$ ist; $\alpha_m = (\alpha_0^m, ..., \alpha_{L-1}^m)^T$ der Vektor der Korrelationsergebnisse ist, $L$ die Anzahl der Wegsignale ist und $\Omega$ eine Matrix der Größe $LxL$ ist, deren Koeffizienten Funktionen der Korrelation der die verschiedenen Wege betreffenden Gewinnfunktionen sind.

6. Empfangsverfahren nach Anspruch 5, **dadurch gekennzeichnet, dass** die Koeffizienten $\Omega_{l'l}$ durch $\Omega_{l'l} = g_{l'}^H g_l$ erhalten werden, wobei $g_l$ und $g_{l'}$ Vektoren sind, die durch Winkelabtastung der die Wege der Indizes $l$ und $l'$ betreffenden Gewinnfunktionen gebildet werden.

7. Empfangsverfahren nach Anspruch 5, **dadurch gekennzeichnet, dass** die Koeffizienten $\Omega_{l'l}$ durch $\Omega_{l'l} = \int G_{l'}(\theta) {}^*G_l(\theta)d\theta$ erhalten werden, wobei $G_l(\theta)$ und $G_{l'}(\theta)$ die die Wege der Indizes $l$ beziehungsweise $l'$ betreffenden Gewinnfunktionen sind und wobei die Summierung auf dem durch das Netz definierten Abtastungswinkelbereich durchgeführt wird.

8. Empfangsverfahren nach einem der vorhergehenden Ansprüche, **dadurch gekennzeichnet, dass** jedes Wegsignal vor der Kombinierung der Wegsignale einer Phasenrückstellung der die verschiedenen Ausbreitungswege zwischen der Quelle und dem Netz betreffenden Komponenten unterzogen wird.

9. Empfangsverfahren nach Anspruch 1, **dadurch gekennzeichnet, dass** für jede Quelle vor dem Kombinierungsschritt und für jedes Wegsignal eine Phasenrückstellung der die verschiedenen Ausbreitungswege zwischen der Quelle und dem Netz betreffenden Komponenten durchgeführt wird.

10. Empfangsverfahren nach Anspruch 9, **dadurch gekennzeichnet, dass** für jede Quelle $S_m$ die Koeffizienten durch die Matrixoperation $\gamma^m = \Omega^{-1}(\alpha^m)^*$ erhalten werden,

    wobei $\gamma_m = (\gamma_0^m, ..., \gamma_{L-1}^m)^T$ der Vektor der Koeffizienten für die Quelle $S_m$ ist; $\alpha_m = (\alpha_0^m, ..., \alpha_{L-1}^m)^T$ der Vektor der Korrelationsergebnisse ist, $L$ die Anzahl der Wegsignale ist und $\Omega$ eine Matrix der Größe $LxL$ ist, deren Koeffizienten Funktionen der Korrelation der die verschiedenen Wege betreffenden Gewinnfunktionen sind.

11. Empfangsverfahren nach Anspruch 10, **dadurch gekennzeichnet, dass** die Koeffizienten $\Omega_{l'l}$ durch $\Omega_{l'l} = g_{l'}^H g_l$ erhalten werden, wobei $g_l$ und $g_{l'}$ Vektoren sind, die durch Winkelabtastung der die Wege der Indizes $l$ und $l'$ betreffenden Gewinnfunktionen gebildet werden.

12. Empfangsverfahren nach Anspruch 10, **dadurch gekennzeichnet, dass** die Koeffizienten $\Omega_{l'l}$ durch $\Omega_{l'l} = \int G_{l'}(\theta) {}^*G_l(\theta)d\theta$ erhalten werden, wobei $G_l(\theta)$ und $G_{l'}(\theta)$ die die Wege der Indizes $l$ beziehungsweise $l'$ betreffenden Gewinnfunktionen sind und wobei die Summierung auf dem durch das Netz definierten Abtastungswinkelbereich durchgeführt wird.

13. Vorrichtung zum Empfang eines durch mindestens eine Quelle ausgesendeten Signals, **dadurch gekennzeichnet, dass** sie Mittel zum Einsetzen des Verfahrens nach einem der Ansprüche 1 bis 12 umfasst.

FIG. 1

FIG.2

FIG. 3

FIG.4

EP 1 255 362 B1

FIG. 5

EP 1 255 362 B1

$600_0$

$x$

$610_0$

$650_0$

$Y_0$

$Z_0$

$610_{L-1}$

$650_{M-1}$

$Y_{L-1}$

$Z_{M-1}$

$600_{N-1}$

$x$

FIG. 6

EP 1 255 362 B1

$y_0$

$751_0$

$\psi_0^m$

755

$\gamma_0^m, \ldots, \gamma_{L-1}^m$

$Z_m$

754

$751_{L-1}$

$y_{L-1}$

$\psi_{L-1}^m$

# FIG. 7

FIG.8

FIG.9

FIG.10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2816161